# EUROPEAN PATENT SPECIFICATION

(11) **EP 2 731 447 B1**
(45) Date of publication and mention of the grant of the patent: **17.08.2016**
(21) Application number: 12738167.1
(22) Date of filing: 13.07.2012
(51) Int. Cl.: A23K 10/00, A01K 15/02

(54) **EDIBLE ANIMAL CHEW**
ESSBARES KAUPRODUKT
PRODUIT COMESTIBLE À MÂCHER

(30) Priority: 14.07.2011 GB 201112162
(43) Date of publication of application: 21.05.2014
(73) Proprietor: Mars Incorporated, McLean, Virginia 22101-3883 (US)
(72) Inventor: ESSLER, Alicia, Batley West Yorkshire WF17 9LU (GB)
(74) Representative: Carpmaels & Ransford LLP
(86) International application number: PCT/GB2012/051676
(87) International publication number: WO 2013/008032

(56) References cited:
- US-A1- 2006 141 105
- US-A1- 2010 224 138
- US-A1- 2011 081 453
- US-A1- 2011 086 130

## Description

The present invention relates to animal chews and, in particular, to dog chews, which have a long lasting time and a natural appearance.

Most dogs enjoy chewing, and owners are therefore often keen to provide suitable chewing products for their animals. Some chewing products are made from materials such as plastics, which are essentially inedible (although dogs may sometimes swallow them) and are indigestible. Such chewing products lack nutritional value and are tasteless and unpalatable to many dogs. Rawhide chews are also commonly available. However, such chews are similarly indigestible and of low palatability. This can lead to the additional negative consequence that a soggy, partially chewed product is left behind by the dog. This can be unhygienic and unpleasant for the owner. In addition, indigestible chews can have adverse effects on the dog's digestion once swallowed: such chews can become impacted in the dog's intestinal tract with life-threatening consequences. There is therefore a desire amongst dog owners for products that are fully edible. There exist several products which, to this end, are made predominantly from food ingredients. US 5,827,565 and US 6,086,940 relate to dog chews which are made predominantly of starch.

Pet chew compositions are typically formed by extrusion, which leads to the final products having a regularity or uniformity or man-made appearance that consumers, who would prefer a chew from an organic source, may find unappealing. Various shapes of edible animal chews have been suggested. For example, US 2007/0212456 describes animal chews in the shapes of a fish, spare ribs and a t-bone steak. US D485661 and DE 20311743U describe cylindrical animal chews. All of these prior art chews have a uniform, regular and/or highly designed appearance characteristic of a manufactured chew.

US2011/0086130A1 and US2011/0081453A1 describe extruding an edible composition such as starch through an adjustable orifice while varying the cross-section dimensions of the orifice to form an extrudate having thickness dimensions that varies along its length. The extrudate may also be passed between cooperating cavities and formed to shape.

US2010/0224138A1 describes an animal chew toy that may assume the shape of dog bone having a body portion and, optionally, end portions. The body portion and end portions may optionally include a plurality of protrusions which may interact with the teeth of an animal that may interface with the animal chew.

A further desirable characteristic of pet chews, and dog chews in particular, is that they be long lasting, such chews are disclosed in EP-1729566-A.

It is an object of this invention to provide an edible animal or pet chew which exhibits excellent lasting time, and a method of production thereof. It is a further object of this invention to provide a chew (particularly a long-lasting chew) which exhibits a natural appearance, and a method of production thereof. The edible animal chew described herein is hence perceived to be naturally or organically formed, rather than the product of a manufacturing process.

It should be noted that an animal 'chew' is quite distinct from an animal or pet 'food', and the two differ in terms of the size of the pieces, in terms of the time taken to consume the product, and in terms of their nutritional content.

With regard to the size of the pieces, the largest pieces in a 'food' are smaller than those in a 'chew'. For instance, WO-01/50882 discloses a food product which is reported as having a large size compared to other dried pet food, and discloses several examples. The largest of these examples is a triangular kibble having the following dimensions: thickness 16 mm, base 28 mm and sides 32 mm. An animal chew has a largest dimension which is significantly larger. As used herein, a 'chew' is an individual piece having a largest dimension of at least about 50 mm, preferably at least about 60 mm, and preferably at least about 70 mm.

With regard to the time taken to consume the product, the animal will normally take much longer to consume a piece of 'chew' than a piece of 'food'. A piece of 'food' may generally be consumed in less than 30 seconds by an average size dog, whereas a 'chew' would take at least 90 seconds to consume (and typically of the order of hours, often over the course of several days, to consume).

According to the present invention, there is provided a method of forming an edible animal chew comprising the steps of a) extruding an edible composition; followed by b) contacting the extrudate with a plurality of post-form rollers, wherein at least one of said post-form rollers exhibits an undulated surface and contacts the extrudate with said undulated surface, wherein said undulated surface comprises a plurality of nodules for imparting undulations onto the extrudate surface, wherein at least some of said nodules have an elongate shape and are offset at an angle to the rotation direction of the post-form roller, said elongate shapes being oriented in two or more different directions.

The use of post-form rollers to modify the surface of the extrudate results in chews that have a more natural appearance, suggesting to the consumer that the chew's shape is organically formed.

Animal chews of the present invention are preferably pet chews, more preferably dog chews.

An extrudate is the product of an extrusion process. It is the product that is produced after the material being extruded has been forced through a die. The direction in which the material is forced through the die is referred to herein as the extrusion direction and the speed at which the extrudate is travelling is referred to herein as the extrusion speed. The freshly-extruded material moves in the extrusion direction under the influence of further material being forced through the die. This motion can be aided by additional components that carry and/or move the extrudate at the speed of extrusion. This is advantageous if the extrudate is to be severed into sections after being formed, or if the extrusion process is semi-continuous. As used herein, the term "sectioned" means that the extrudate has been severed into discrete sections.

Upon exiting the extrusion die, i.e. prior to post-forming, the extrudate may have any cross-sectional shape when viewed down the extrusion direction, for example the extrudate may have a circular or square cross-sectional shape. The extrudate may have a cross-sectional shape that is regular or irregular. The extrudate may have a cross-sectional shape that comprises curved sections. Preferably, the cross-sectional shape will be an irregular shape that comprises curved sections, as this contributes to the final natural appearance of the extrudate.

The post-form rollers which contact the extrudate are in the form of discs. The discs have two circular surfaces joined by a circumferential surface. The circumferential surface contacts the extrudate. The discs are rotatably mounted so that they rotate around an axis (referred to herein as "the rotation axis") that extends through the centre of the two circular surfaces of the disc. The discs rotate as the extrudate moves in the extrusion direction. The discs may be caused to rotate due to the disc surfaces contacting the moving extrudate or, preferably, the discs may be rotated by an alternative source of rotation, such as a motor. If the discs' rotation is caused by an alternative source of rotation, then this source may cause the post-form roller surface to move at a speed that is less than the extrusion speed or at substantially the same speed as the extrusion speed. Setting the speed of motion of the post-form roller surface to be less than the extrusion speed impacts the shape of the extrudate as the extrudate's motion is inhibited by the post-form rollers. Preferably the post-form roller surfaces move at the same or substantially the same speed as the extrusion speed.

At least one of the plurality of post-form rollers has a circumferential surface that is undulated. In other words, the perpendicular distance from the rotation axis of the post-form roller to its circumferential surface can vary with position on the circumferential surface.

The presence of undulations on the surface of the post-form roller that contacts the extrudate leads to the formation of undulations on the surface of the extrudate. These undulations on the extrudate are the impressions left by the undulations on the post-form roller's surface. In this way, the external appearance of the extrudate can be modified.

The undulated surface of the post-form roller is formed by the presence of a plurality of nodules. These nodules are discrete regions where the circumferential surface protrudes relative to the surrounding area of the circumferential surface. The nodules may be separated by circumferential surface that has the shortest perpendicular distance to the rotation axis of the post-form roller, a so-called base level of the circumferential surface. Alternatively, some of the nodules may impinge on each other, so that on moving along the circumferential surface from one nodule to the next the circumferential surface has a decreasing, then increasing perpendicular distance to the rotation axis of the post-form roller, but the circumferential surface never returns to the base level. Such impingement is described below with respect to the figures. In one embodiment, all of the nodules impinge on their adjacent nodules. Nodule impingement results in smooth undulations on the extrudate surface, leading to a more natural and less manufactured appearance. The nodules can be of a variety of shapes. For instance, nodules may be elliptical (as used herein elliptical does not include circular), circular or elongate in shape. The nodules on the undulated surface of a post-form roller may exhibit a plurality of nodule shapes and/or a plurality of nodule sizes, which results in a more natural and less manufactured appearance in the final product. In one embodiment, all nodules on a post-form roller are the same shape and/or the same size.

The shape of a nodule, as used herein, refers to the shape of the perimeter of the nodule on the circumferential surface, the perimeter of the nodule being where the protrusion of the nodule commences relative to the surrounding area. For example, if a nodule has the three-dimensional form of a hemisphere, then its shape is said to be circular.

Elongate shapes are those which have a longitudinal axis. The longitudinal axis may be curved and extends in the long direction of the shape so to divide the shape substantially into two portions with equal dimensions perpendicular to the longitudinal axis. For example, where the elongate shape is an ellipse, the longitudinal axis corresponds to the semi-major axis. Preferably, the elongate shape is an ellipse.

It is preferred that the majority of nodules have an elongate shape, which results in elongate indentations being formed on the extrudate surface. As used herein, the term 'majority' means greater than 50%, greater than 65%, greater than 75%, or preferably greater than 85%. In one embodiment, all of the nodules have an elongate shape. It has been found that the use of elongate shapes results in a more natural and less manufactured appearance in the final product. Preferably, the majority of nodules have an elliptical shape.

The plurality of nodules may be oriented in a variety of ways. References to nodule orientation made herein are referring to the orientation of the elongate nodules only, i.e. those shapes with a longitudinal axis. These nodules are said to be oriented in the direction defined by their longitudinal axis. In the case of shapes that have a longitudinal axis that is curved or otherwise changes direction along the length of the shape, the orientation is defined by the tangent to the longitudinal axis half-way along the length of the longitudinal axis of the shape.

Nodules are preferably not oriented parallel to the rotation direction of the post-form roller. The rotation direction is the direction of motion of the circumferential surface when the post form roller is rotated. At least some of the nodules are oriented at an angle relative to the rotation direction of the post-form roller. In other words, the nodules are offset at an angle to the rotation direction. Preferably, the majority of nodules are oriented at an angle relative to the rotation direction of the post-form roller. It has been found that having the majority of nodules being offset from the rotation direction results in a more natural and less manufactured appearance in the contacted extrudate.

The nodules are preferably offset at an angle of greater than 5° relative to the rotation direction of the post-form roller, alternatively greater than 10°, alternatively greater than 15°. The nodules are preferably offset at an angle of less than 85° relative to the rotation direction of the post-form roller, alternatively less than 80°, alternatively less than 75°.

The elongate shaped nodules are offset from the rotation direction in two or more different directions, alternatively three or more different directions, alternatively four or more different directions, alternatively five or more different directions. The nodules being oriented in a greater number of different offset directions leads to a more natural and less manufactured appearance.

The nodules typically protrude from the circumferential post-form roller surface by about 5 mm or more, alternatively 8 mm or more, alternatively 1 cm and more. Typically, the nodules protrude from the circumferential post-form roller surface by no more than about 1.5 cm. In one embodiment, the nodules protrude from the circumferential post-form roller surface by a distance of from about 1 cm to about 1.5 cm. The nodules with a longitudinal axis may be about 0.5 cm or more in width (measured perpendicular to the longitudinal axis), alternative 1 cm or more in width, alternatively 1.5 cm or more in width, alternatively 2 cm or more in width. Typically, the nodules are no more than about 2.5 cm in width. In one embodiment, the nodules with a longitudinal axis preferably have a width from about 2 cm to about 2.5 cm.

The elongate nodules may have a length (measured along their longitudinal axis) of about 1 cm or more, alternatively about 2 cm or more, alternatively 3 cm or more, alternatively 4 cm or more. Typically, the nodules are no more than about 5 cm in length.

Any circular nodules may be about 0.5 cm in diameter, 1 cm or more in diameter, alternatively 1.5 cm or more in diameter, alternatively 2 cm or more in diameter. Typically, any circular nodules are no more than about 2.5 cm in diameter.

The extrudate may be contacted by two post-form rollers, three post-form rollers, or four post-form rollers.

In the case of two post-form rollers, a pair of post-form rollers are positioned to contact opposite sides of the extrudate. This positioning allows the application of equal pressure to opposite sides of the extrudate.

In the case of four post-form rollers, the extrudate is contacted by a first pair of post-form rollers and a second pair of post-form rollers. The two rollers in each pair are positioned to contact opposite sides of the extrudate. This gives an extrudate that is contacted on its external surface by four post-form rollers. Preferably, the four post-form rollers are positioned evenly around the extrudate. In other words, two of the post-form roller discs are positioned to lie in the same plane with their circumferential surfaces contacting opposite sides of the extrudate, while the other two of the post-form roller discs are positioned to lie in the same plane, which is perpendicular to the plane defined by the other pair of rollers, with their circumferential surfaces contacting opposite sides of the extrudate.

Preferably, one pair of rollers is arranged to contact opposite sides of the extrudate with the circular surfaces of the disc lying in a vertical plane. In this arrangement, one roller will be supporting the weight of the extrudate.

In one embodiment, the minimum gap between the post-form rollers contacting opposite sides of the extrudate is approximately 2 mm to approximately 15 mm. The minimum gap is the distance between the highest point on each roller when these highest points are positioned directly opposite each other. In one embodiment the minimum gap between the post-from rollers is approximately 5 mm. Varying this gap will vary the amount of contact the rollers make with the extrudate.

The undulated post-form roller may be positioned to contact the extrudate so that the full depth of the nodule, and the circumferential surface surrounding the nodule contacts the extrudate. This will result in indentations of a depth and length corresponding to the height and length of nodule that made the indentation on the post-form roller surface. Alternatively, the post-form roller may contact the extrudate so that only an upper portion of the nodules contacts the extrudate, and the circumferential surface surrounding the nodules does not contact the extrudate. This will result in indentations that have a depth and length that may be less than the height and length of the nodule that caused the indentation. Varying the amount of contact between the undulated surface of the roller and the extrudate will vary the amount by which the surface is modified and so vary the final appearance of the product.

One, two, three or four post-form rollers may comprise an undulated surface.

When two post-form rollers are used, it is preferable that both of the post-form roller surfaces are undulated, as described herein. When four post-form rollers are used, it is preferable that all of the post-form roller surfaces are undulated, as described herein. Such configurations lead to a more natural and less manufactured appearance of the extrudate.

Unexpectedly, it was found that contacting the extrudate with two post-form roller surfaces, which are both undulated, results in a product with a particularly natural appearance.

Where the process uses a plurality of post-form rollers having undulated surfaces, the post-form rollers can be the same as each other or may be different. Thus, the nodules on one post-form roller can exhibit the same or different shape and/or the same or different size as the nodules on another post-form roller used in the process. The invention also encompasses a process in which some of the post-form rollers having undulated surfaces are the same as one or more of the other post-form rollers, while other post-form rollers used in the process are different.

The extrusion die can be of any suitable shape. The die may be a regular shape or an irregular shape. The die shape may comprise curved sections. A die that is an irregular shape and has curved sections helps create an extrudate with a natural and less manufactured appearance.

In the preferred process, the post-form rollers contact the extrudate immediately after it has exited the extrusion die. The post-form rollers are preferably positioned within 1.5 m of the extrusion die. The positioning of the post-form rollers a short distance after the extrudate has exited the extrusion die ensures the extrudate is still malleable when it encounters the post-form rollers. Sufficient malleability in the extrudate will allow the post-form rollers to deform the extrudate's surface. It is also preferable that the extrudate is such that it exhibits a substantially plastic behaviour when being contacted by the post-form rollers. In this way the deformation imparted by the post-form rollers will be result in a permanent deformation to the surface of the extrudate.

The post-form rollers may be used with a coextrusion process, in which multiple distinct compositions are extruded together through a single die. In a preferred embodiment, a co-extrudate comprises an inner composition and an outer composition (an inner and outer portion), as explained further herein.

The extrudate is typically sectioned in a direction which is substantially perpendicular to the extrusion direction. This results in the production of individual chews. This sectioning may occur before or after contact with the post-form rollers. Preferably, the sectioning occurs after the contact with the post-form rollers so that the post-form roller treatment is continuous.

The extrudate is preferably sectioned so that each section has indentations caused by contact with approximately two nodules of each undulated post-form roller surface. It has been found that the indentation of two nodules from each undulated roller results in each section having a particularly natural appearance.

In a preferred embodiment of the process of the present invention, the undulated circumferential surface of the post-form roller has a length in the rotation direction that is at least twice the length of the sectioned extrudate measured in the extrusion direction, preferably at least three times the length of the sectioned extrudate, or preferably at least four times the length of the sectioned extrudate. The increasing circumferential length of the post-form roller relative to the sectioned extrudate length reduces the number of sectioned extrudates that have a similar appearance due to contact with the same nodules. This leads to a more natural and less manufactured appearance when viewing multiple chews.

Optionally, the undulated circumferential surface of the post-form roller has a length in the rotation direction that does not approximate to a multiple of sectioned extrudate lengths. This further decreases the number of sectioned extrudates that have a similar appearance due to contact with the same combination of nodules and leads to a more natural appearance when viewing multiple chews.

The present invention also relates to an apparatus for modifying the surface of an extrudate comprising a plurality of post-form rollers, wherein at least one of said post-form rollers exhibits an undulated surface and the post-form rollers are positioned around a central axis extending in the extrusion direction, the undulated surface comprising a plurality of nodules for imparting undulations onto the extrudate surface, wherein at least some of the nodules have an elongate shape and are offset at an angle to the rotation direction of the post-form roller, said elongate shapes being oriented in two or more different directions.

The post-form rollers may be manufactured from any suitable material that is dimensionally stable during operation. Preferably, the post-form rollers comprise a polymer. Polymers that can be utilised for manufacturing the post-form rollers include polyacetal and PTFE.

The post-form roller disc preferably has a radius of from about 50 to about 400 mm, typically approximately 200 mm, measured from its rotational axis to the lowest point on the circumferential surface. The circumferential surface has a width of from about 20 mm to about 60 mm, and in one embodiment is approximately 45 mm wide, measured in a direction parallel to the disc's rotation axis.

The post-form roller disc circumferential surface preferably has at least one nodule per 60 mm of length measured in the rotation direction, alternatively at least one nodule per 50 mm of length, alternatively at least one nodule per 40 mm of length, alternatively at least one nodule per 30 mm of length.

The post-form roller disc circumferential surface preferably has no more than one nodule per 15 mm of length measured in the rotation direction, alternatively no more than one nodule per 20 mm of length, alternatively no more than one nodule per 25 mm of length.

The present invention further relates to an edible animal chew produced by the methods or using the apparatus described herein.

The present invention further provides an edible animal chew comprising a longitudinal axis and an outer surface extending in the longitudinal direction, the outer surface comprising a plurality of indentations, wherein at least some of the indentations have an elongate shape and are oriented to be offset at an angle to the longitudinal axis of the animal chew, said elongate indentations being angularly offset in at least two different directions, wherein the outer surface has no more than two indentations per 15 mm of length measured along the longitudinal direction of the chew.

The outer surface of the animal chew refers to the external surface that extends in the direction of the longitudinal axis. The outer surface does not refer to the exposed cross-sectional ends which are perpendicular to the longitudinal axis.

The indentations are formed as impressions of the nodules, described herein, in the outer surface of the animal chew. Hence the features of the nodules result in analogous features for the indentations.

The plurality of indentations on the edible chew outer surface may have a variety of shapes. The indentations may be circular, elliptical, or elongate in shape. The majority of indentations being elongate in shape results in the chew exhibiting a less manufactured and more natural appearance. In one embodiment, all of the indentations may have an elongate shape.

The shape of an indentation refers to the shape of the perimeter of the indentation, where the surface begins to be depressed compared to the surrounding outer surface. For example, if the indentation has the three dimensional form of a hemisphere, the shape of the indentation will be a circle.

The plurality of indentations may be oriented in a variety of ways. The orientation of the elongate indentation shapes is analogous to that described above for the nodules. The majority of indentations are preferably oriented to be offset at an angle to the longitudinal axis of the animal chew.

The plurality of indentations are angularly offset from the longitudinal axis of the edible chew in at least two different directions, alternatively at least three different directions, or at least four different directions, alternatively at least five different directions. The increase in different indentation orientations gives the animal chew a more natural appearance.

The indentations typically exhibit a depth of about 0.5 cm or more, alternatively about 0.8 cm or more, alternatively 1 cm or more relative to the surrounding outer surface that is not indented. Typically, the indentations exhibit a depth of no more than about 1.5 cm, relative to the surrounding outer surface that is not indented. In one embodiment, the indentations have a depth of from 1 cm to 1.5 cm.

The indentations with a longitudinal axis may be about 0.5 cm or more in width (measured perpendicular to the longitudinal axis), alternatively 1 cm or more in width, alternatively 1.5 cm or more in width, alternatively 2 cm or more in width. Typically, the indentations are no more than about 2.5 cm in width.

The indentations with a longitudinal axis are typically about 1 cm or more in length (measured along the longitudinal axis), alternatively about 2 cm or more in length, alternatively about 3 cm or more in length, alternatively 4 cm or more in length. Typically the indentations with a longitudinal axis are no more than about 5 cm in length.

Any circular indentations may be about 0.5 cm or more in diameter, 1 cm or more in diameter, alternatively 1.5 cm or more in diameter, alternatively 2 cm or more in diameter. Typically, the indentations are no more than about 2.5 cm in diameter.
The animal chew has a transverse cross-section perpendicular to the longitudinal axis. This transverse cross-section varies in shape along the longitudinal axis of the animal chew due to the presence of the indentations on the outer surface of the animal chew. The cross-sectional shape of the animal chew for portions unaffected by indentations (if any such cross-sections are present) may be any shape. The cross-sectional shape may be a regular shape or an irregular shape. The cross-sectional shape may comprise curved sections. Preferably, the cross-sectional shape is irregular and comprises curved sections, to enhance the natural appearance of the product. Such a natural appearance is further aided if the cross-sectional shape only consists of curved sections.

The length of the chew along the chew longitudinal axis is preferably at least 80 mm, alternatively at least 100 mm, alternatively at least 120 mm, typically no greater than about 250 mm, more typically no greater than about 200 mm. The transverse cross-sectional diameter is preferably greater than 5 mm, alternatively greater than 10 mm, alternatively greater than 15 mm, alternatively greater than 20 mm. The cross-sectional diameter refers to the greatest straight-line distance spanning the transverse cross-sectional shape.

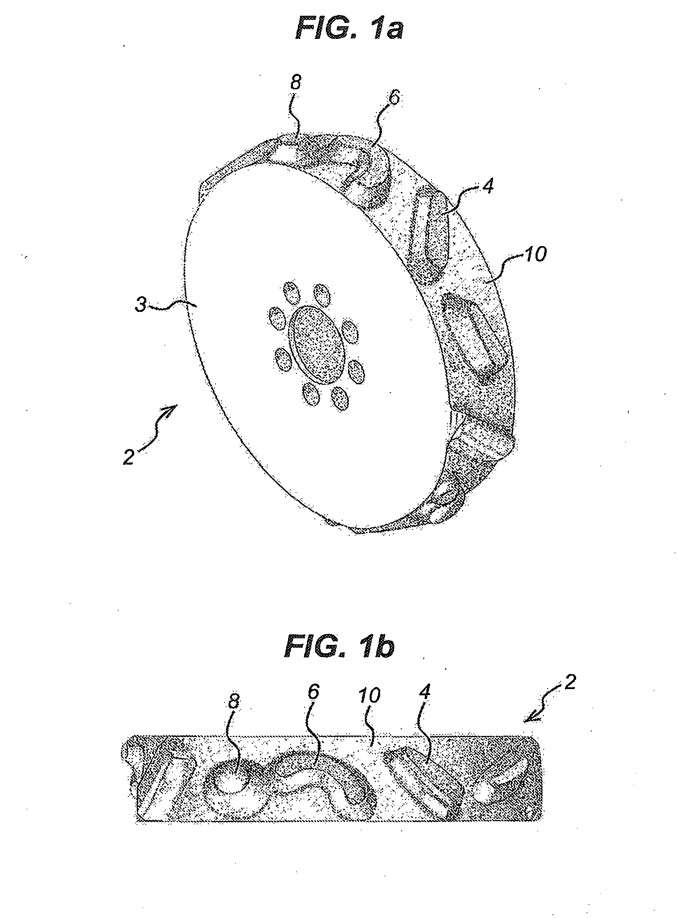

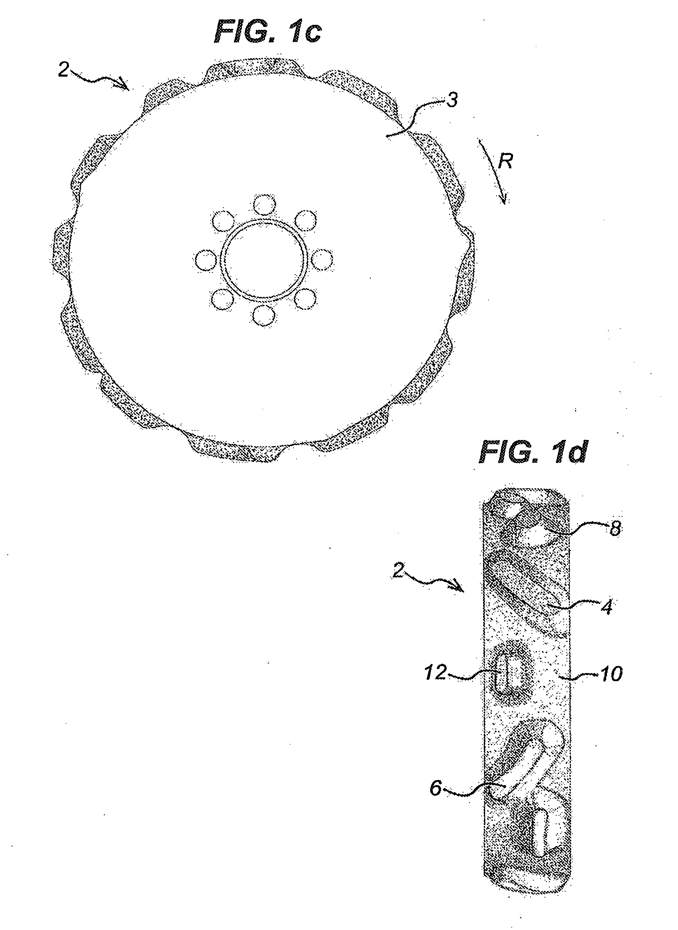

Figure 1a depicts a perspective view of a post-form roller 2 for use with the present invention. The post-form roller 2 is in the form of a disc with two circular surfaces 3 and a circumferential surface 10. Figures 1b and 1d depict plan views of the post-form roller 2 looking down on to the circumferential surface 10. Figure 1c depicts a side view of the post-form roller 2 showing a circular surface 3. There are a plurality of nodules 4, 6, 8, 12 on the circumferential surface 10. The majority of nodules 4, 6 are elongate in shape, although some circular nodules 8 can be seen. The majority of nodules 4, 6 are also offset from the rotation direction R. Elongate nodules 6 with a curved longitudinal axis can be seen. The tangent to this curved longitudinal axis, halfway along the length of the longitudinal length, is also offset at an angle to the rotation direction. It can be seen that the nodules 4, 6, 12 are oriented in at least three different directions. Some of the nodules 8, 6 impinge on adjacent nodules, while other nodules 4, 12 do not.

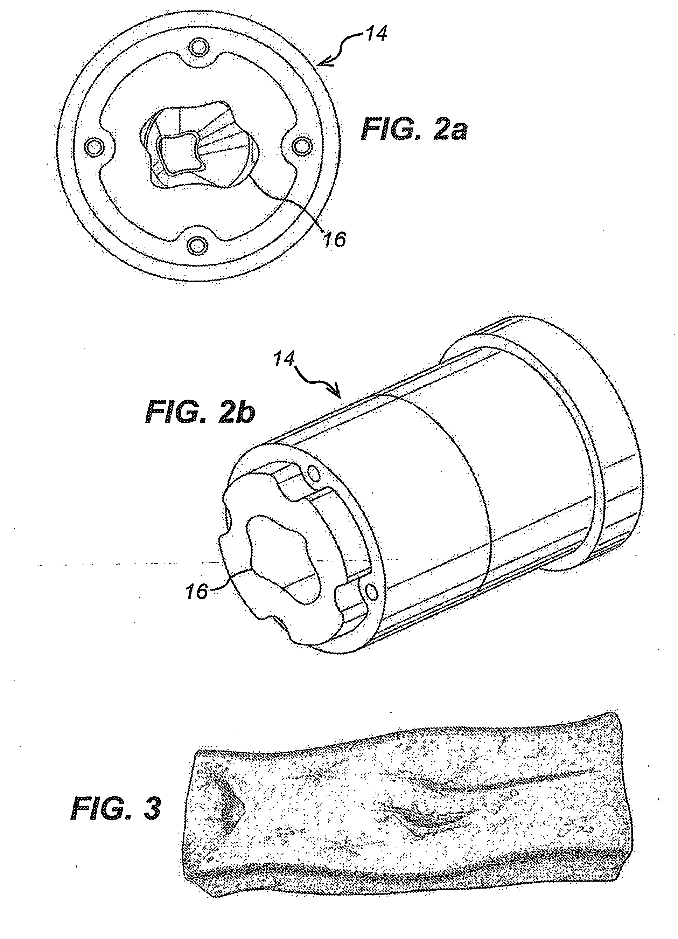

Figure 2a depicts a plan view of an extrusion die 14 for use with the present invention. Figure 2b depicts a perspective view of the extrusion die 14. The die shape 16 is irregular and comprises curved sections to result in a curved and irregular extrudate. Such a die contributes to the natural appearance of the final product.
Figure 3 is a depiction of a chew of the present invention. There are two indentations on each of the upper and lower surfaces. The indentations are elongate, resulting in an undulating effect on the outer surface that gives the product a natural, non-manufactured appearance.

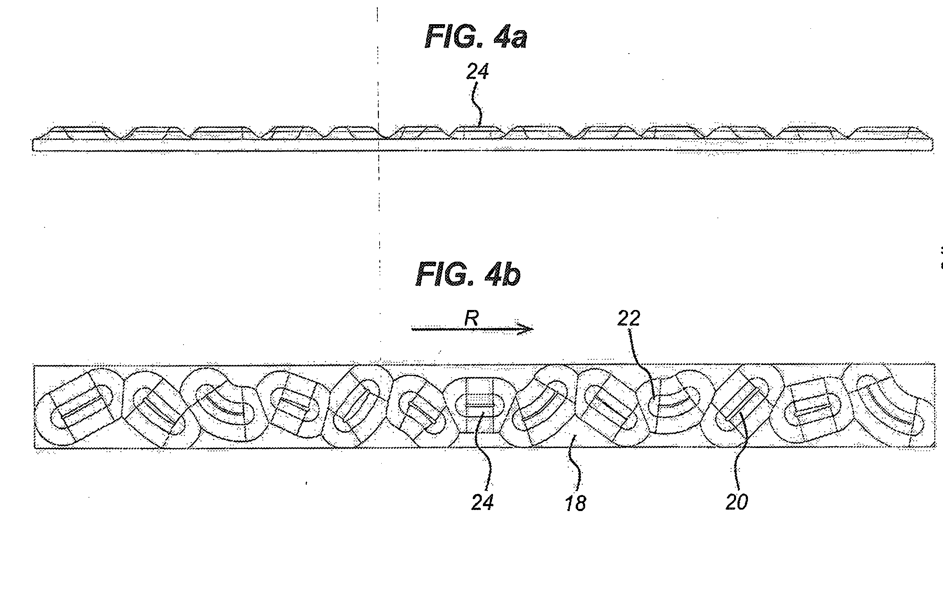

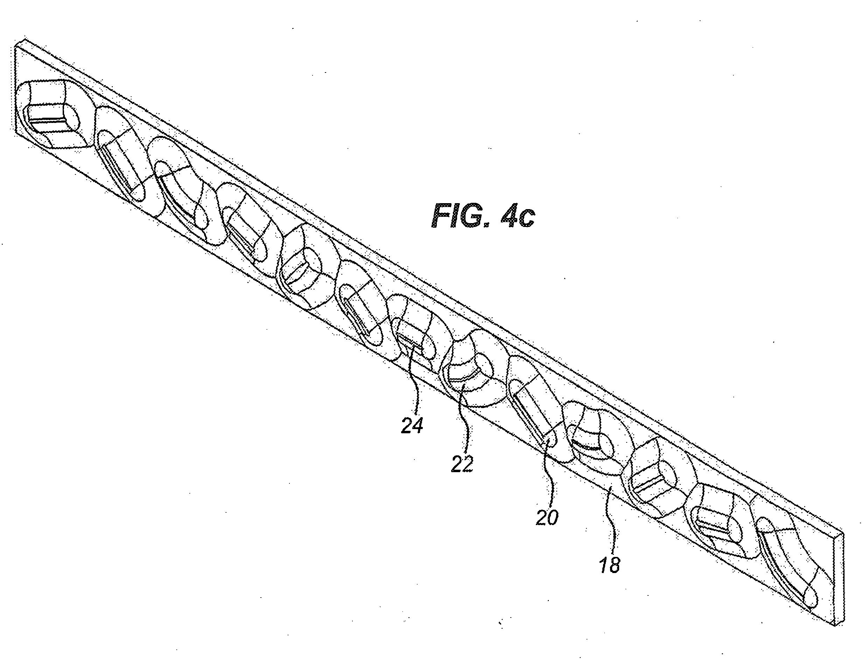

Figures 4a-c depict a circumferential surface 18 of a post-form roller of the present invention. The circumferential surface 18 is depicted laid out flat for ease of representation. Figure 4a depicts a side view of the circumferential surface 18, Figure 4b depicts a plan view looking down on the circumferential surface 18, and Figure 4c depicts a perspective view of the circumferential surface 18. The circumferential surface 18 has a plurality of nodules 20, 22, 24 protruding from the surface 18. All of the nodules have an elongate shape. Some of the nodules 20, 24 have a straight longitudinal axis while other nodules 22 have a curved longitudinal axis. The majority of nodules 20, 22 are offset at an angle to the rotation direction R. The nodules 20, 22, 24 are oriented in a plurality of different directions. Each of the nodules impinges on its adjacent nodules.

Any suitable extrusion apparatus may be used for the present invention, including conventional cooker-extruders, and either single-screw or twin-screw, preferably twin-screw extruders may be used.

The animal chew comprises ingredients which are conventional in the art of making edible animal chews. For instance, the chew may be a primarily carbohydrate-based (typically starch-based) composition, or may be a primarily protein-based composition, or may contain a significant proportion of both carbohydrate (typically starch) and protein. The composition preferably also comprises fibre. The composition optionally also comprises humectants, salt, spices, seasonings, vitamins, minerals, antioxidants, preservatives, flavouring agents, oils, fat, emulsifiers, lipids and the like, as desired.

The starch(es) may be derived from corn, wheat, modified wheat, tapioca, sorghum, potato, sweet potato, rice, oat, beets, barley, soy, other cereals or grains, and mixtures thereof. Tapioca starch, pea starch, mixtures thereof or mixtures of tapioca starch and/or pea starch and any of the aforementioned types may also be used. The starch used may be one type of starch or may alternatively consist of a mixture of types of starches. Pure or substantially pure starches may be used if desired. The type(s) of starch(es) used may be characterised by starch profiles having all possible proportions of amylopectin, intermediates and amylose. The exact source(s) of starch used is not critical. In general the starch source(s) is(are) selected on the basis of cost and palatability considerations.

At least a portion of the starch may be gelatinized starch. Particularly improved lasting time is achieved when the gelatinized starch is in combination with fibre (preferably insoluble fibre), preferably wherein the fibre is dispersed in the gelatinized starch. The term "gelatinized starch" as used herein means starch that has been processed in the presence of water such that its native granular structure has been destroyed and that the crystalline regions of the starch have been melted. Importantly, the effect of such processing is to convert the native starch, which is essentially indigestible, into a form which is digestible.

Protein component(s) may be derived from plants, animals or fungi or combination thereof. Exemplary proteins include wheat gluten, corn zein, corn gluten, sunflower protein, legume protein, soy protein, pea protein, peanut protein, rapeseed, protein, nut protein (e.g., hazelnut, almond, pistachio protein), milk protein (e.g. casein (for instance sodium caseinate, calcium caseinate and potassium caseinate) and whey protein), collagen gelatin, keratin, egg albumin, or mycoprotein. Protein is typically present in amounts no more than about 50%, for instance from about 5% to about 45%, or from about 10% to about 35% by weight.

Highly soluble proteins may be used to alter the texture of the animal chew. Examples of such proteins include milk proteins and, where used, such proteins may be included in amounts up to about 30%, typically from about 3% to about 25%, more typically from about 5% to about 20% by weight. The proteins may be selected to create hydrophobic bonding and disulfide cross-linking, which can promote elasticity. Such proteins are typically rich in prolamines, and examples include wheat gluten, corn zein and soy protein. Proteins rich in prolamines are practically insoluble in water and absolute ethanol but can be dissolved in water-ethanol mixtures. Thus, where used, such proteins may be included in amounts up to about 30%, typically from about 3% to about 25%, more typically from about 8% to about 20% by weight. The protein component may comprise a casein or whey protein in combination with a protein that is rich in prolamines.

Fibre may be soluble or insoluble fibre, and preferably insoluble fibre. The fibre may be any suitable fibre. Examples of suitable fibres include soy fibre, rice hull fibre, pea hull fibre, oat hull fibre, barley hull fibre, sugar beet fibre, wheat bran fibre, fibres derived from animal tissue (for example from the skin, muscles, intestines, tendons, hides of animals), collagen and pure cellulose. Dietary fibre sources include cell wall polysaccharides (cellulose, hemicelluloses, pectins) and non-cell wall polysaccharides (guar, locust bean gums, gum arabic, gum karaya, tragacanth gums, agar, alginates and carrageenan). A suitable cellulose fibre is Solka-Floc TM. The fibre is generally selected on the basis of cost and palatability considerations. However, a fibre which results in a lower density product is preferred; for example a cellulose fibre. Mixtures of fibres may be used. In one embodiment, the fibre contains lignin. Fibre typically forms 30% or less by weight, preferably 25% or less by weight, preferably 20% or less by weight.

Exemplary humectants include sucrose, sodium chloride, sorbitol, glycerine, starch hydrolysate, glucose, maltose, lactose, gums, galactose, citric acid, alanine, glycine, high frutose corn syrup, tartaric acid, malic acid, xylose, PEG 400, PEG 600, propylene glycol, aminobutyric acid, mannitol, mannose, or lactulose. More particularly, the humectant is selected from propylene glycol, glycerin and starch hydrolysate, and particularly from combination of all three, for instance wherein the amount of propylene glycol is less than about 10%, more preferably is less than about 4%, and even more preferably is less than about 3% by weight. A humectant may be present in amounts up to about 50%, more typically up to about 35% by weight.

If added, lipids may be any suitable animal fats, for example tallow, or may be vegetable fats, or combinations thereof. Suitable fat sources include corn, soybean, cottonseed, peanut, grapeseed, sunflower, olive oils, tallow, lard, shortening and butter and combinations thereof. Fat may be present in amounts up to about 20%, typically from about 3% to about 15%, and in one embodiment from about 4% to about 9% by weight.

Suitable emulsifiers include lecithin and monoglycerides, and preferably the emulsifier is lecithin. Preferably, an emulsifier will be present in an amount of from 0% to 10% by weight of the chew and more preferably 0% to 6% by weight.

A plasticizer may or may not be present in the animal chew. A plasticizer other than water may or may not be present in the animal chew. If a plasticizer is present, preferably it is mixed with the starch. Although water has suitable plasticizing qualities, as mentioned above, an additional plasticizer may be used. A preferred class of plasticizer is the class of polyols. This class comprises, amongst others, glycol, diethylene glycol, alkylene glycols, polyalkylene glycol, sorbitol, glycerol, glycerol mono-esters and the like. Other suitable classes of plasticizers include esters of citric acid and urea. If a plasticizer other than water is used, glycerol, glycol or a combination thereof is preferred. The glycerol and/or glycol can function both as a plasticizer and a humectant. Preferably, the plasticizer other than water forms less than 35% by weight, more preferably less than 25% by weight, and more preferably less than 15% by weight.

Additional ingredients may include natural and artificial antioxidants, e.g. butylated hydroxyanisole (BHA) and butylated hydroxytoluene (BHT), to retard the oxidation process that can result in rancid product. Mold inhibitors (such as potassium sorbate) can be added to prevent and/or retard the growth of yeasts and molds that result in product spoilage. Ingredients that control water activity can also be included, for example, glycerine and propylene glycol, which also help reduce the risk of microbiological spoilage Texture modifiers, such as cellulose, can also be added. Vitamin and mineral preblends provide appropriate levels of vitamins and minerals required for a balanced daily diet.

The moisture content of the chews is typically no more than about 35% by weight of the chew. Preferably, water forms 25% or less by weight of the chew, more preferably 15% or less by weight, and preferably at least about 5% by weight, more preferably at least 9% by weight. Further, the amount of water in the pet chew may comprise preferably about 5% to about 30%, more preferably about 10% to about 25%, and even more preferably about 10% to about 20% by weight.

As used herein, the term "water activity" is a measurement of the energy status of the water in a system; represented by a quotient between water's partial pressure in the food and pure water's partial pressure. It indicates how tightly water is bound, structurally or chemically, within a substance. This is measured by equilibrating the liquid phase (in the sample) with the vapor phase (in the headspace) and measuring the relative humidity of that space. The water activity (Aw) is typically from about 0.50 to about 0.85, more preferably from about 0.60 to about 0.80, and more preferably from about 0.60 to about 0.75.

In a first embodiment, referred to herein as a starch-based composition, the composition utilises the various ingredients and their respective amounts described hereinabove, in which the total proportion of starch in the chew is greater than or equal to 35% by weight, preferably greater than or equal to 50%, and in a further embodiment at least about 70%, preferably at least about 90%. Fibre is present in the amounts generally as described above, and preferably in an amount of 2 to 20% by weight, typically 5 to 15%, and in one embodiment 5% to 10% by weight of the chew. In an alternative embodiment, the chew contains no fibre.

In a second embodiment, referred to herein as a protein-based composition, the edible animal chew utilises the various ingredients and their respective amounts described hereinabove. Protein is typically present in amounts from about 5% to about 50% by weight of the chew, and otherwise as generically described above. Carbohydrate (typically starch) may be present in an amount of from about 20% to about 80%, more typically from about 25% to about 70%, and preferably from about 30% to about 65% by weight of the chew. Humectant may be present in amounts of from about 5 to about 50% of the chew, and otherwise as generically described above. Fibre may be present in amounts of from about 0.5% to about 15%. Water may be present in amounts of from about 5 to about 30%. Such a composition is disclosed in EP-1692946-A.

In a third embodiment, the animal chew comprises a composition such as that disclosed in WO-2007/149962-A. Thus, the animal chew may comprise:
(a) fibrous protein in an amount of from about 15 to about 90% by weight of the chew;
(b) water-absorbing polymer in an amount of from about 5 to about 35% by weight of the chew, particularly wherein the water-absorbing polymer is selected from the group consisting of gelling proteins, hydrocolloids, edible hydrogels and mixtures thereof;
(c) plasticizer in an amount of from about 5 to about 40% by weight of the chew; and
(d) water in an amount of from about 1 to about 20% by weight of the chew.

The component percentage values "by weight" or "by weight of the chew" recited herein are references to the weight of the component as a percentage of the weight of the final chew, i.e. its dry weight after manufacture. The chews of the present invention are made via an extrusion process, in which solid and liquid components are mixed, and these components typically contain water. The manufacturing process typically drives off a proportion of any water present in this mixture within the extruder. Typically, the amount of water driven off as steam is small and is typically less than 5% by weight of the total solid and liquid components added to the extruder. As such, the weight percentage of a given component (other than water or starch) in the chew typically differs by about 2% or less from the weight percentage of that component in the mixture. The weight percentage of starch in the chew typically differs by about 4% or less from the weight percentage of starch in the mixture.

A specific example of a conventional extrusion gelatinization process for making a chew comprising gelatinized starch, is as follows. Thus, in an extrusion gelatinization process, a dry feed mixture is prepared from the starch source in the form of a flour or meal, and optionally a fibre source. The dry feed mixture may then be fed into a preconditioner or straight into the extruder. In the preconditioner, water or steam, or both, is mixed into the dry feed mixture. Further, liquid flavour components, such as flavour digests or tallow, may be mixed into the dry feed mix in the preconditioner. Sufficient water and/or steam, and optionally liquid flavour components, is/are mixed into the feed mixture to raise the moisture content of the dry feed mixture. The moistened feed leaving the preconditioner is then fed into an extruder. The extruder may be any suitable single or twin screw cooking-extruder. Suitable extruders may be obtained from, for instance Wenger Manufacturing Inc, Clextral SA, Buhler AG. During passage through the extruder, the moistened feed passes through a cooking zone, in which it is subjected to mechanical shear and heat, and a forming zone. The gauge pressure in the forming zone is from about 600 kPa to about 10 MPa. If desired, water or steam, or both, may be introduced into the cooking zone. Other liquids, including humectants such as glycerol or glycol, may also be introduced into the extruder during cooking.

Further, during passage through the extruder, the starch ingredients of the moistened feed are gelatinized to provide the gelatinized starch matrix. The gelatinization of the starch is achieved by processing at elevated temperature, and controlling one or more of the cooking time, moisture and/or shear. Low moisture contents, such as those which prevail in many extrusion cookers (< ca. 30% and often < ca. 20% moisture) are generally unfavourable to starch gelatinization. Hence, many extrusion cookers rely upon the generation of a great deal of shear stress to mitigate the low moisture conditions and achieve high levels of starch gelatinisation (see "The Technology of Extrusion Cooking", N.D. Frame (Ed.). Blackie Academic and Professional, 1994, Chapter 3). Finally, the composition is forced through the extrusion die to assume a structure before contact with the post-form rollers, as described herein.

The degree of gelatinization of the starch may be varied to further modulate the lasting time of the chew. In certain embodiments, the animal chew may comprise a degree of gelatinization greater than 30% on total starch basis. Thus, the degree of starch gelatinization is preferably about 30 to about 100%, more preferably about 45% to about 100% and even more preferably about 70 to about 100%. In one embodiment of the present invention, the starch preferably has gelatinization levels of greater than 80%, preferably greater than 85%, preferably greater than 90%, preferably greater than 92.5%, preferably greater than 95%, preferably greater than 97.5%, preferably greater than 98%, and preferably at least 99% by weight. The use of starch with such gelatinization levels, and preferably in combination with fibre, provides further advantages in terms of lasting time. The use of high gelatinization levels results in an extrudate with a plastic nature. This plastic nature aids the permanent deformation of the extrudate surface by the post-form rollers. The degree of starch gelatinization may be measured according to the method disclosed in WO-2005/092087-A.

An animal chew may be characterised with reference to its mechanical properties. For instance, properties of animal chews can be studied by texture analysis using a Stable Micro Systems TA-HDi Texture Analyser, and in particular by studying the "6 mm probe" characteristic. In this test, the sample is laid horizontally, supported by a plate with a central hole to allow the probe to pass through, and a force is applied to the sample by a 6 mm diameter cylindrical probe which moves vertically downwards at a corresponding to the widest part of the product. In the tests described herein, the speed of this vertical downward motion is held at 1 mm/sec (so that the time in seconds and the depth of penetration in mm are numerically identical). As the probe enters the sample, the force required to maintain the downward motion at the set vertical speed is recorded by the instrument. The test data are thus plotted as force against time (sec) which, as noted above, is equivalent to force against penetration (mm).

The present invention is described in the examples below by way of illustration.

### Example 1

A chew was manufactured on an apparatus comprising two twin-screw cooker-extruders connected to enable coextrusion of an extrudate with an inner and an outer portion. As described above, a dry feed mix and a liquid component were fed separately into the extruder and used for each of the inner and outer portions. The compositions of the starting mixtures (using weight percentages) are given in Table 1. The outer composition forms 70 wt% of the chew's total composition and the inner composition forms 30 wt% of the chew's total composition. The temperature profile along the cooker-extruders was controlled in a multi-zonal manner, such that the ingredients were introduced into a zone at a temperature of between about 20 and 30°C, and then passed into one or more zones at temperatures of between about 95 and 125°C, and then into one or more zones at temperatures between about 45 and 70°C. The amount of specific mechanical energy (SME) put into the extrudate for the outer composition was between about 40 and 50 Joules, and between about 50 and 60 Joules for the inner composition. The extruders are connected to a vacuum system for extraction of hot gases and vapour from the extrusion process.

**Table 1**

| Outer powder composition | Wt.% of outer powder composition | Wt. % of outer composition | Wt.% total recipe |
|---|---|---|---|
| *Cereal Flour* | *62.48201* | 52.48489 | *36.7394* |
| *Wheat Flour* | *20.72000* | *17.40480* | *12.1834* |
| *Sugar* | *9.09679* | *7.64130* | *5.3489* |
| *Sodium Chloride* | *1.80000* | *1.51200* | *1.0584* |
| *Potassium Chloride* | *0.63430* | *0.53281* | *0.3730* |
| *Potassium Sorbate* | *0.56690* | *0.47620* | *0.3333* |
| *Burnt sugar powder* | *1.45000* | *1.21800* | 0.8526 |
| *Liver Powder* | *3.25000* | *2.73000* | *1.9110* |

| Outer liquid composition | Wt.% of outer liquid composition | Wt. % of outer composition | Wt.% total recipe |
|---|---|---|---|
| *Glycerol* | *69.01670* | *11.04267* | *7.7299* |
| *Water* | *26.01891* | *4.16303* | *2.9141* |
| *Propylene Glycol* | *2.94490* | *0.47118* | *0.3298* |
| *Palatability Agent* | *1.3071* | *0.20914* | *0.1464* |
| *Chicken Flavour* | *0.712388* | *0.11398* | *0.0798* |

| Inner powder composition | Wt.% of inner powder composition | Wt.% of inner composition | Wt.% total recipe |
|---|---|---|---|
| *Vegetable Starch* | *24.84350* | *20.37167* | *6.11150* |
| *Cereal Flour* | *34.26097* | *28.09400* | *8.42820* |
| *Sugar* | *3.91600* | *3.21112* | *0.96334* |
| *Liver Powder* | *4.80000* | *3.93600* | *1.18080* |
| *Potassium Chloride* | *0.78320* | *0.64222* | *0.19267* |
| *Sodium Chloride* | *0.52000* | *0.42640* | *0.12792* |
| *Potassium Sorbate* | *0.58740* | *0.48167* | *0.14450* |
| *Calcium Carbonate* | *1.55000* | *1.27100* | *0.38130* |
| *DICALCIUM PHOSPHATE* | *4.19000* | *3.43580* | *1*.*03074* |
| *Vitamin Mix* | *2*.*91303* | *2.38868* | *0.71660* |
| *Soya Flour Fine* | *21*.*63590* | *17*.*74144* | *5.32243* |

| Inner liquid composition | Wt.% of inner liquid composition | Wt.% of inner composition | Wt.% total recipe |
|---|---|---|---|
| *Glycerol* | *61*.*52914* | *11.07525* | *3*.*32257* |
| *Water* | *27.57202* | *4.96296* | *1.48889* |
| *Propylene Glycol* | *8.706954* | *1*.*56725* | *0.47018* |
| *Palatability Agent* | *1.489028* | *0.26803* | *0.08041* |
| *Chicken Flavour* | *0.702857* | *0.12651* | *0.03795* |

The coextruded extrudate was contacted with a pair of vertically aligned post-form rollers, having a gap of 5 mm between them, which acted on the top and bottom surfaces of the extrudate, followed by the sectioning of the extrudate immediately after the post-forming rollers. The sectioned product was cooled by forced flow of cooled air to within 10°C of room temperature before packing. The process resulted in multiple edible animal chews approximately 12 cm in length and approximately 2 cm in diameter, and having a natural and less manufactured appearance.

## Claims

1. A method of forming an edible animal chew comprising the steps of
a. extruding an edible composition; followed by
b. contacting the extrudate with a plurality of post-form rollers (2), at least one of said post-form rollers (2) exhibits an undulated surface (10) and contacts the extrudate with said undulated surface (10), the undulated surface (10) comprising a plurality of nodules (4, 6, 8, 12) for imparting undulations onto the extrudate surface, wherein at least some of the nodules (4, 6) have an elongate shape and are offset at an angle to the rotation direction of the post-form roller, said elongate shapes being oriented in two or more different directions.

2. The method according to claim 1, wherein the edible composition is a two part composition and is coextruded into an inner and outer portion.

3. The method according to claim 1 or claim 2, wherein the extrudate has an irregular cross-sectional shape comprising curved sections before contact with the plurality of post-form rollers.

4. The method according to any preceding claim, comprising the additional step of cutting the extrudate into sections substantially perpendicular to the extrusion direction after contact with the post-form rollers.

5. The method according to claim 4, wherein each post-form roller with an undulated surface imparts two undulations per section of extrudate.

6. The method of any preceding claim, wherein the majority of nodules have an elongate shape and are offset at an angle to the rotation direction of the post-form roller.

7. The method of any preceding claim, wherein the plurality of post-form rollers is two post-form rollers.

8. The method of claim 7, wherein the two post-form rollers each exhibit an undulated surface that contacts the extrudate.

9. The method of claim 7 or claim 8, wherein the two post-form rollers are oriented in a vertical plane.

10. The method according to any preceding claim, wherein the elongate nodules are between 2 cm and 2.5 cm long.

11. The method according to any preceding claim, wherein the plurality of nodules comprises nodules (8) that are circular in shape.

12. The method according to any preceding claim, wherein the nodules protrude from the post-form roller surface by a distance from 1 cm to 1.5 cm.

13. The method according to any preceding claim, wherein each of the post-form rollers are in the form of a disc.

14. The method of claim 13, wherein the undulated post-form roller surface is the circumferential surface of the disc.

15. An apparatus for modifying the surface of an extrudate comprising a plurality of post-form rollers (2), wherein at least one of said post-form rollers (2) exhibits an undulated surface (10) and the post-form rollers (2) are positioned around a central axis extending in the extrusion direction, the undulated surface (10) comprising a plurality of nodules (4, 6, 8, 12) for imparting undulations onto the extrudate surface, wherein at least some of the nodules (4, 6) have an elongate shape and are offset at an angle to the rotation direction of the post-form roller, said elongate shapes being oriented in two or more different directions.

16. The apparatus of claim 15, wherein the majority of nodules have an elongate shape and are offset at an angle to the rotation direction of the post-form roller.

17. The apparatus of claim 15 or claim 16, wherein the plurality of post-form rollers is two post-form rollers.

18. The apparatus of claim 17, wherein the two post-form rollers each exhibit an undulated surface that contacts the extrudate.

19. The apparatus of claim 17 or claim 18, wherein the two post-form rollers are oriented in a vertical plane.

20. The apparatus according to any one of claims 15 to 19, wherein the elongate nodules are between 2 cm and 2.5 cm long.

21. The apparatus according to any one of claims 15 to 20, wherein the plurality of nodules comprises nodules (8) that are circular in shape.

22. The apparatus according to any one of claims 15 to 21, wherein the nodules protrude from the post-form roller surface by a distance from 1 cm to 1.5 cm.

23. The apparatus according to any one of claims 15 to 22, wherein each of the post-form rollers are in the form of a disc.

24. The apparatus of claim 23, wherein the undulated post-form roller surface is the circumferential surface of the disc.

25. An edible animal chew comprising a longitudinal axis and an outer surface extending in the longitudinal direction, the outer surface comprising a plurality of indentations, wherein at least some of the indentations have an elongate shape and are oriented to be offset at an angle to the longitudinal axis of the animal chew, said elongate indentations being angularly offset in at least two different directions, wherein the outer surface has no more than two indentations per 15 mm of length measured along the longitudinal direction of the chew.

26. The edible animal chew of claim 25, wherein the indentations result in the chew having a naturally formed, rather than manufactured, appearance.

## Patentansprüche

1. Verfahren zum Herstellen eines verzehrbaren Tier-Kauprodukts, umfassend die Schritte
a. Extrudieren einer verzehrbaren Zusammensetzung; gefolgt von
b. Inkontaktbringen des Extrudats mit einer Vielzahl von Nachformwalzen (2), wobei wenigstens eine der Nachformwalzen (2) eine gewellte Oberfläche (10) aufweist und über die gewellte Oberfläche (10) mit dem Extrudat in Kontakt kommt, wobei die gewellte Oberfläche (10) eine Vielzahl von Knötchen (4, 6, 8, 12) aufweist, um der Extrudatoberfläche Welligkeiten zu verleihen, wobei wenigstens manche der Knötchen (4, 6) eine langgestreckte Form aufweisen und zu der Drehrichtung der Nachformwalze winkelversetzt sind, wobei die langgestreckten Formen in zwei oder mehr verschiedene Richtungen ausgerichtet sind.

2. Verfahren gemäß Anspruch 1, wobei die verzehrbare Zusammensetzung eine zweiteilige Zusammensetzung ist und in einen inneren und einen äußeren Teil koextrudiert wird.

3. Verfahren gemäß Anspruch 1 oder Anspruch 2, wobei das Extrudat vor dem Kontakt mit der Vielzahl von Nachformwalzen eine unregelmäßige Querschnittsform aufweist.

4. Verfahren gemäß einem der vorstehenden Ansprüche, umfassend den zusätzlichen Schritt des Schneidens des Extrudats nach dem Kontakt mit den Nachformwalzen in Abschnitte im Wesentlichen senkrecht auf die Extrusionsrichtung.

5. Verfahren gemäß Anspruch 4, wobei jede Nachformwalze mit einer gewellten Oberfläche pro Abschnitt an Extrudat zwei Wellungen verleiht.

6. Verfahren gemäß einem der vorstehenden Ansprüche, wobei die Mehrzahl der Knötchen eine langgestreckte Form aufweist und zu der Drehrichtung der Nachformwalze winkelversetzt ist.

7. Verfahren gemäß einem der vorstehenden Ansprüche, wobei es sich bei der Vielzahl von Nachformwalzen um zwei Nachformwalzen handelt.

8. Verfahren gemäß Anspruch 7, wobei die beiden Nachformwalzen jeweils eine gewellte Oberfläche aufweisen, die mit dem Extrudat in Kontakt kommt.

9. Verfahren gemäß Anspruch 7 oder Anspruch 8, wobei die beiden Nachformwalzen in einer Vertikalebene ausgerichtet sind.

10. Verfahren gemäß einem der vorstehenden Ansprüche, wobei die langgestreckten Knötchen zwischen 2 cm und 2,5 cm lang sind.

11. Verfahren gemäß einem der vorstehenden Ansprüche, wobei die Vielzahl von Knötchen Knötchen (8) umfasst, die kreisförmig geformt sind.

12. Verfahren gemäß einem der vorstehenden Ansprüche, wobei die Knötchen um einen Abstand von 1 cm bis 1,5 cm von der Oberfläche der Nachformwalze vorragen.

13. Verfahren gemäß einem der vorstehenden Ansprüche, wobei jede der Nachformwalzen in der Form einer Scheibe vorliegt.

14. Verfahren gemäß Anspruch 13, wobei die gewellte Oberfläche der Nachformwalze die Umfangsfläche der Scheibe ist.

15. Vorrichtung zum Modifizieren eines Extrudats, umfassend eine Vielzahl von Nachformwalzen (2), wobei wenigstens eine der Nachformwalzen (2) eine gewellte Oberfläche (10) aufweist und die Nachformwalzen (2) um eine zentrale Achse angeordnet sind, die in der Extrusionsrichtung verläuft, wobei die gewellte Oberfläche (10) eine Vielzahl von Knötchen (4, 6, 8, 12) aufweist, um der Extrudatoberfläche Welligkeiten zu verleihen, wobei wenigstens manche der Knötchen (4, 6) eine langgestreckte Form aufweisen und zu der Drehrichtung der Nachformwalze winkelversetzt sind, wobei die langgestreckten Formen in zwei oder mehr verschiedene Richtungen ausgerichtet sind.

16. Vorrichtung gemäß Anspruch 15, wobei die Mehrzahl der Knötchen eine langgestreckte Form aufweist und zu der Drehrichtung der Nachformwalze winkelversetzt ist.

17. Vorrichtung gemäß Anspruch 15 oder Anspruch 16, wobei es sich bei der Vielzahl von Nachformwalzen um zwei Nachformwalzen handelt.

18. Vorrichtung gemäß Anspruch 17, wobei die beiden Nachformwalzen jeweils eine gewellte Oberfläche aufweisen, die mit dem Extrudat in Kontakt kommt.

19. Vorrichtung gemäß Anspruch 17 oder Anspruch 18, wobei die beiden Nachformwalzen in einer Vertikalebene ausgerichtet sind.

20. Vorrichtung gemäß einem der Ansprüche 15 bis 19, wobei die langgestreckten Knötchen zwischen 2 cm und 2,5 cm lang sind.

21. Vorrichtung gemäß einem der Ansprüche 15 bis 20, wobei die Vielzahl von Knötchen Knötchen (8) umfasst, die kreisförmig geformt sind.

22. Vorrichtung gemäß einem der Ansprüche 15 bis 21, wobei die Knötchen um einen Abstand von 1 cm bis 1,5 cm von der Oberfläche der Nachformwalze vorragen.

23. Vorrichtung gemäß einem der Ansprüche 15 bis 22, wobei jede der Nachformwalzen in der Form einer Scheibe vorliegt.

24. Vorrichtung gemäß Anspruch 23, wobei die gewellte Oberfläche der Nachformwalze die Umfangsfläche der Scheibe ist.

25. Verzehrbares Tier-Kauprodukt, umfassend eine Längsachse und eine Außenoberfläche, die in der Längsrichtung verläuft, wobei die Außenoberfläche eine Vielzahl von Vertiefungen umfasst, wobei wenigstens manche der Vertiefungen eine langgestreckte Form aufweisen und zu der Längsachse des Tier-Kauprodukts winkelversetzt ausgerichtet sind, wobei die langgestreckten Vertiefungen in wenigstens zwei verschiedene Richtungen winkelversetzt sind, wobei die Außenoberfläche nicht mehr als zwei Vertiefungen pro 15 mm Länge, gemessen entlang der Längsrichtung des Kauprodukts, aufweist.

26. Verzehrbares Tier-Kauprodukt gemäß Anspruch 25, wobei die Vertiefungen dazu führen, dass das Kauprodukt ein natürlich gebildetes und nicht fabrikgefertigtes Aussehen aufweist.

## Revendications

1. Méthode de formation d'un produit à mâcher comestible pour animaux, comprenant les étapes
a. d'extrusion d'une composition comestible ; suivie
b. d'une mise en contact de l'extrudat avec une pluralité de rouleaux de post-formage (2), au moins l'un desdits rouleaux de post-formage (2) présentant une surface ondulée (10) et mettant en contact l'extrudat avec ladite surface ondulée (10), la surface ondulée (10) comprenant une pluralité de nodules (4, 6, 8, 12) destinés à conférer des ondulations sur la surface de l'extrudat, où au moins une partie des nodules (4, 6) possèdent une forme allongée et sont déportés selon un angle par rapport au sens de rotation du rouleau de post-formage, lesdites formes allongées étant orientées selon deux, ou plus, directions différentes.

2. Méthode selon la revendication 1, dans laquelle la composition comestible est une composition en deux parties et est co-extrudée en une portion interne et externe.

3. Méthode selon la revendication 1 ou la revendication 2, dans laquelle l'extrudat possède une forme de section transversale irrégulière comprenant des sections cintrées avant contact avec la pluralité de rouleaux de post-formage.

4. Méthode selon l'une quelconque des revendications précédentes, comprenant l'étape supplémentaire de découpage de l'extrudat en sections sensiblement perpendiculaires par rapport au sens d'extrusion après contact avec les rouleaux de post-formage.

5. Méthode selon la revendication 4, dans laquelle chaque rouleau de post-formage ayant une surface ondulée confère deux ondulations par section d'extrudat.

6. Méthode selon l'une quelconque des revendications précédentes, dans laquelle la majorité de nodules possèdent une forme allongée et sont déportés selon un angle par rapport au sens de rotation du rouleau de post-formage.

7. Méthode selon l'une quelconque des revendications précédentes, dans laquelle la pluralité de rouleaux de post-formage est constituée de deux rouleaux de post-formage.

8. Méthode selon la revendication 7, dans laquelle les deux rouleaux de post-formage présentent chacun une surface ondulée qui entre en contact avec l'extrudat.

9. Méthode selon la revendication 7 ou la revendication 8, dans laquelle les deux rouleaux de post-formage sont orientés selon un plan vertical.

10. Méthode selon l'une quelconque des revendications précédentes, dans laquelle les nodules allongés sont d'une longueur comprise entre 2 cm et 2,5 cm.

11. Méthode selon l'une quelconque des revendications précédentes, dans laquelle la pluralité de nodules comprend des nodules (8) qui sont de forme circulaire.

12. Méthode selon l'une quelconque des revendications précédentes, dans laquelle les nodules dépassent de la surface du rouleau de post-formage d'une distance allant de 1 cm à 1,5 cm.

13. Méthode selon l'une quelconque des revendications précédentes, dans laquelle chacun parmi les rouleaux de post-formage se trouve sous la forme d'un disque.

14. Méthode selon la revendication 13, dans laquelle la surface du rouleau de post-formage ondulée est la surface circonférentielle du disque.

15. Appareil destiné à modifier la surface d'un extrudat, comprenant une pluralité de rouleaux de post-formage (2), dans lequel au moins l'un desdits rouleaux de post-formage (2) présente une surface ondulée (10) et les rouleaux de post-formage (2) sont positionnés autour d'un axe central s'étendant dans le sens de l'extrusion, la surface ondulée (10) comprenant une pluralité de nodules (4, 6, 8, 12) destinés à conférer des ondulations sur la surface de l'extrudat, où au moins une partie des nodules (4, 6) possèdent une forme allongée et sont déportés selon un angle par rapport au sens de rotation du rouleau de post-formage, lesdites formes allongées étant orientées selon deux, ou plus, directions différentes.

16. Appareil selon la revendication 15, dans lequel la majorité de nodules possèdent une forme allongée et sont déportés selon un angle par rapport au sens de rotation du rouleau de post-formage.

17. Appareil selon la revendication 15 ou la revendication 16, dans laquelle la pluralité de rouleaux de post-formage est constituée de deux rouleaux de post-formage.

18. Appareil selon la revendication 17, dans laquelle les deux rouleaux de post-formage présentent chacun une surface ondulée qui entre en contact avec l'extrudat.

19. Appareil selon la revendication 17 ou la revendication 18, dans lequel les deux rouleaux de post-formage sont orientés selon un plan vertical.

20. Appareil selon l'une quelconque des revendications 15 à 19, dans laquelle les nodules allongés sont d'une longueur comprise entre 2 cm et 2,5 cm.

21. Appareil selon l'une quelconque des revendications 15 à 20, dans laquelle la pluralité de nodules comprend des nodules (8) qui sont de forme circulaire.

22. Appareil selon l'une quelconque des revendications 15 à 21, dans laquelle les nodules dépassent de la surface du rouleau de post-formage d'une distance allant de 1 cm à 1,5 cm.

23. Appareil selon l'une quelconque des revendications 15 à 22, dans laquelle chacun parmi les rouleaux de post-formage se trouve sous la forme d'un disque.

24. Appareil selon la revendication 23, dans laquelle la surface du rouleau de post-formage ondulée est la surface circonférentielle du disque.

25. Produit à mâcher comestible pour animaux comprenant un axe longitudinal et une surface externe s'étendant dans le sens longitudinal, la surface externe comprenant une pluralité d'indentations, où au moins une partie des indentations possèdent une forme allongée et sont orientées afin d'être déportées selon un angle par rapport à l'axe longitudinal du produit à mâcher pour animaux, lesdites indentations allongées étant déportées angulairement selon au moins deux directions différentes, où la surface externe possède au plus deux indentations par 15 mm de longueur mesurée le long du sens longitudinal du produit à mâcher.

26. Produit à mâcher comestible pour animaux selon la revendication 25, dans lequel les indentations conduisent à un aspect naturellement formé, plutôt que manufacturé, pour le produit à mâcher.
